(19) Europäisches Patentamt

European Patent Office

Office européen des brevets

(11) Veröffentlichungsnummer: **0 319 650**
**A1**

(12) **EUROPÄISCHE PATENTANMELDUNG**

(21) Anmeldenummer: 88112528.0

(22) Anmeldetag: 02.08.88

(51) Int. Cl.⁴: **F16L 43/00**

(30) Priorität: 08.12.87 DE 3741443

(43) Veröffentlichungstag der Anmeldung:
14.06.89 Patentblatt 89/24

(84) Benannte Vertragsstaaten:
DE ES FR GB IT

(71) Anmelder: **Paul Isphording Metallwerke GmbH. & Co. KG**
**Finnentroper Strasse 16**
**D-5952 Attendorn(DE)**

(72) Erfinder: **Otto, Friedhelm**
**Sassestrasse 16**
**D-5952 Attendorn(DE)**

(74) Vertreter: **Patentanwaltsbüro Cohausz & Florack**
**Schumannstrasse 97**
**D-4000 Düsseldorf 1(DE)**

(54) **Brennerrohr.**

(57) Die Erfindung betrifft ein Brennerrohr zur Gasführung vom Brennerhahn zum Brenner eines Gasgerätes mit einem Krümmer, auf dessen Oberseite der Brenner befestigt, insbesondere aufgeschraubt oder aufgesteckt ist und der eine waagerechte und eine senkrechte Bohrung aufweist, die einander durchdringen. Der Körper (1) des Brennerrohres ist von einer Scheibe (2) einer Profilstange gebildet, deren Querschnitt denjenigen Außenabmessungen des Körpers vor seiner Bearbeitung entspricht, die der Körper im Bereich einer senkrechten Ebene aufweist, die durch die zwei Bohrungsachsen verläuft.

Fig. 1

## Brennerrohr

Die Erfindung betrifft ein Brennerrohr zur Gasführung vom Brennerhahn zum Brenner eines Gasgerätes mit einem Krümmer, auf dessen Oberseite der Brenner befestigt, insbesondere angeschraubt ist und der eine waagerechte und eine senkrechte Bohrung aufweist, die einander durchdringen.

Es ist bekannt, solche gekrümmten Brennerrohre, die an der Oberseite den Brenner tragen, im Druckguß- bzw. im Kokillenguß-Verfahren herzustellen. Die Brennerrohre haben je nach Brennerart und Brennergröße verschiedene Formen und verschiedene Arten der Befestigung für den Brenner. Aufgrund dieser unterschiedlichen Brennerformen und -größen als auch der diversen Befestigungsarten sind verschiedene Kokillen- oder Druckgußwerkzeuge zur Herstellung des Brennerrohres erforderlich. Dies ist arbeitsaufwendig und teuer.

Aufgabe der Erfindung ist es, ein Brennerrohr der eingangs genannten Art so zu verbessern, daß das Herstellungsverfahren vereinfacht wird und die unterschiedlichsten Brennerrohre in Anpassung an die verschiedenen Brenner geschaffen werden können, ohne stets neue Kokillen- und Druckgußformen zu erfordern.

Diese Aufgabe wird erfindungsgemäß dadurch gelöst, daß der Körper des Brennerrohres von einer Scheibe einer Profilstange gebildet ist, deren Querschnitt denjenigen Außenabmessungen des Körpers vor seiner Bearbeitung entspricht, die der Körper im Bereich einer senkrechten Ebene aufweist, die durch die zwei Bohrungsachsen verläuft.

Ein solches Brennerrohr wird auf einfache Weise von einer entsprechend geformten Profilstange in Scheiben abgeschnitten bzw. abgesägt und danach sind nur noch wenige Arbeitsgänge erforderlich, um das gewünschte fertige Brennerrohr in den verschiedensten Ausgestaltungen zu erhalten. Damit kann das Brennerrohr an die unterschiedlichsten Brenner bei einfachster Herstellung angepaßt werden. Im Gegensatz zu gegossenen oder gespritzten Brennerrohren ist eine Nacharbeit nicht erforderlich. Darüber hinaus besteht erheblicher Vorteil, daß eine geringere Gesamthöhe des Brennerrohrs erreicht werden kann und damit je nach Bedarf eine geringe Gesamthöhe zusammen mit dem Brenner erzielbar ist. Es kann damit allen Forderungen und Wünschen eines Kunden bei einfachster Herstellung entsprochen werden. Die Variabilität ist hier besonders hoch.

Besonders einfach ist die Produktion dann, wenn die zu der Ebene parallelen äußeren Seitenwände des Körpers die Schnittflächen sind, durch die der Körper von der Profilstange getrennt wurde. Auch sollte das Profil einen etwa L-förmigen Querschnitt aufweisen, so daß die beiden Arme dieses Querschnitts das Material für die beiden Bohrungen bildet.

Vorzugsweise wird vorgeschlagen, daß der obere Bereich des Körpers koaxial zur senkrechten Bohrung zu einem Rohrstutzen abgedreht ist. Hierbei kann zur Befestigung des Brenners der Rohrstutzen ein Außengewinde aufweisen.

Von Vorteil ist auch, wenn in die waagerechte Bohrung ein Rohrstück eingesteckt ist.

Ein Ausführungsbeispiel der Erfindung ist in der Zeichnung dargestellt und wird im folgenden näher beschrieben. Es zeigen:

Figur 1 einen senkrechten Schnitt durch das Brennerrohr längs einer Ebene, die durch die zwei Bohrungsachsen verläuft,

Figur 2 eine Draufsicht auf das Brennerrohr mit teilweisem Schnitt durch das Ende des eingesteckten Rohres,

Figur 3 eine Seitenansicht des Brennerrohrkörpers nach dem Abschneiden von der Profilstange vor seiner Bearbeitung und

Figur 4 eine Stirnansicht des Teiles nach Figur 3.

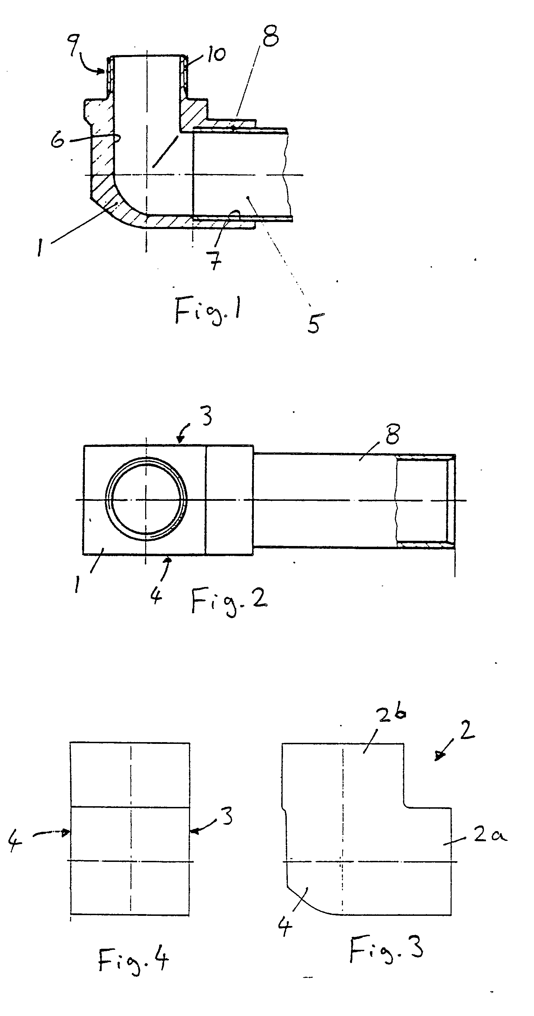

Das Brennerrohr weist einen Körper 1 auf, der als Scheibe 2 von einer Aluminium-Profilstange abgeschnitten wurde. Diese Profilstange besitzt damit den Querschnitt entsprechend der Abbildung Figur 3, wobei zusätzlich zur L-Form weitere Ausformungen und Abrundungen je nach Bedarf vorgesehen sind. Diese den Körper in der Rohform darstellende Scheibe 2 besitzt damit zwei zueinander parallele Seitenflächen 3, 4, die auch in der endgültigen Form entsprechend Figur 2 erhalten bleiben.

Die im Querschnitt als auch in den Seitenansichten L-förmige Scheibe 2 weist damit zwei kurze Arme 2a, 2b auf. In den waagerechten Arm 2a ist eine horizontale Sackbohrung 5 und in den senkrechten Arm 2b eine senkrechte Sackbohrung 6 eingebracht, wobei die Achsen beider Bohrungen einander schneiden und die Bohrungen damit ineinander übergehen, um die Durchflußleitung für das Gas zu bilden. Die Bohrung 5 weist eine koaxiale geringförmige, nach außen sich öffnende Erweiterung 7 auf, um hiermit ein waagerechtes Rohrstück 8 aufzunehmen, das in dieser Erweiterung 7 abdichtend eingepreßt wird. Dieses Rohr 8 verbindet den Körper 1 mit dem Brennerhahn des Gasgerätes.

Der obere Bereich des Armes 2b ist koaxial zur Bohrung 6 abgedreht und diese Abdrehung 9 weist ein Außengewinde 10 auf, auf das der Brenner aufgeschraubt wird.

Da die Durchmesser der beiden Bohrungen 6, 7 als auch der Abdrehung 9 und der Erweiterung 7 unterschiedlich gewählt werden können und ferner auch die Höhe des Armes 2b noch während der Fertigung leicht veränderbar ist, kann das Brennerrohr den verschiedensten Anforderungen leicht angepaßt werden. Die Wandstärke des Metalls, insbesondere des Aluminiums kann verschieden dick sein, ohne Nachteile in Kauf nehmen zu müssen. Dagegen muß bei den herkömmlichen Spritzteilen mit etwa gleichen Wandstärken gearbeitet werden, um Lunkerbildungen zu verhindern.

**Ansprüche**

1. Brennerrohr zur Gasführung vom Brennerhahn zum Brenner eines Gasgerätes mit einem Krümmer, auf dessen Oberseite der Brenner befestigt, insbesondere aufgeschraubt oder aufgesteckt ist und der eine waagerechte und eine senkrechte Bohrung aufweist, die einander durchdringen, **dadurch gekennzeichnet,** daß der Körper (1) des Brennerrohres von einer Scheibe (2) einer Profilstange gebildet ist, deren Querschnitt denjenigen Außenabmessungen des Körpers vor seiner Bearbeitung entspricht, die der Körper im Bereich einer senkrechten Ebene aufweist, die durch die zwei Bohrungsachsen verläuft.

2. Brennerrohr nach Anspruch 1, **dadurch gekennzeichnet,** daß die zu der Ebene parallelen äußeren Seitenwände (3, 4) des Körpers (1) die Schnittflächen sind, durch die der Körper von der Profilstange getrennt wurde.

3. Brennerrohr nach Anspruch 1 oder 2, **dadurch gekennzeichnet,** daß das Profil einen etwa L-förmigen Querschnitt aufweist.

4. Brennerrohr nach einem der vorherigen Ansprüche, **dadurch gekennzeichnet,** daß der obere Bereich des Körpers (1) koaxial zur senkrechten Bohrung (6) zu einem Rohrstutzen (9) abgedreht ist.

5. Brennerrohr nach Anspruch 4, **dadurch gekennzeichnet,** daß zur Befestigung des Brenners der Rohrstutzen (9) ein Außengewinde (10) aufweist.

6. Brennerrohr nach einem der vorherigen Ansprüche, **dadurch gekennzeichnet,** daß in die waagerechte Bohrung (5) ein Rohrstück (8) eingesteckt ist.

7. Brennerrohr nach einem der vorherigen Ansprüche, **dadurch gekennzeichnet,** daß der Körper (1) senkrechte Seitenwände (3, 4) aufweist.

8. Brennerrohr nach einem der vorherigen Ansprüche, **dadurch gekennzeichnet,** daß der Körper (1) eine waagerechte Unterseite und eine abgestufte Oberseite aufweist.

Fig. 1

Fig. 2

Fig. 4

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 157 748 (INKOMAG) <br> * Seite 4, Zeilen 14-22; Seite 5, Zeilen 13-22; Figuren 4-6 * | 1-3 | F 16 L 43/00 |
| A | | 4-8 | |
| | --- | | |
| X | US-A-1 868 037 (WEATHERHEAD) <br> * Seite 1, Zeilen 48-65; Figuren 1,6,7 * | 1,2 | |
| A | | 7,8 | |
| | --- | | |
| A | US-A-1 860 604 (BALDWIN) <br> * Anspruch 4 * | 1 | |
| | --- | | |
| A | DE-U-1 727 611 (KREFFT AG) <br> ----- | | |

RECHERCHIERTE SACHGEBIETE (Int. Cl.4)

F 16 L 43/00

Der vorliegende Recherchenbericht wurde für alle Patentansprüche erstellt

| Recherchenort | Abschlußdatum der Recherche | Prüfer |
|---|---|---|
| BERLIN | 14-03-1989 | SCHAEFFLER C.A.A. |